# EUROPEAN PATENT SPECIFICATION

(11) **EP 1 174 959 B1**
(45) Date of publication and mention of the grant of the patent: **13.10.2004**
(21) Application number: 01116581.8
(22) Date of filing: 09.07.2001
(51) Int. Cl.: H01R 13/658

(54) **EMI gasket for connector assemblies**
Störstrahlsichere Dichtung für Steckverbinder
Joint d'étanchéité contre les intérférences électromagnétiques pour connecteurs

(30) Priority: 12.07.2000 US 614758
(43) Date of publication of application: 23.01.2002
(73) Proprietor: MOLEX INCORPORATED, Lisle Illinois 60532 (US)
(72) Inventor: Szilagyi, Daniel B., Naperville, Illinois 60540 (US); Grois, Igor, Northbrook, Illinois 600 63 (US); Ernst, Scot A., Plainfield, Illinois 60544 (US)
(74) Representative: Herden, Andreas F.

(56) References cited:
- GB-A- 1 179 975
- US-A- 3 505 463
- US-A- 4 572 921

## Description

### Field of the Invention

This invention generally relates to the art of connector assemblies, such as fiber optic connector assemblies, electrical connector assemblies and the like, and particularly to an EMI gasket for such connector assemblies.

### Background of the Invention

A connector assembly, such as a fiber optic connector assembly or an electrical connector assembly, typically includes a pair of mating connectors, such as plug and receptacle connectors sometimes called male and female connectors, or other types of mating devices which may include adapters for mounting connectors through a panel, backplane or the like. Regardless of the connector configuration, the connectors or connecting devices typically include some form of plug portion of one connector or connecting device inserted into a receptacle portion of a mating connector or connecting device. The plug portion and receptacle portion, therefore, define a connecting interface of the connector assembly.

A typical fiber optic connector, for instance, includes a ferrule which mounts and centers an optical fiber or fibers within the connector. The ferrule may be fabricated of such material as ceramic, and a ferrule holder or other housing component of the connector embraces the ferrule and may be fabricated of such material as plastic, cast metal or the like. A pair of fiber optic connectors or a connector and another optical fiber transmission device often are mated in an adapter which centers the fibers to provide low insertion losses. The adapter couples the connectors together so that their encapsulated fibers connect end-to-end. The adapter may be an in-line component or the adapter can be designed for mounting in an opening in a panel, backplane, circuit board or the like. Therefore, the adapter and a mating connector may have a plug and receptacle-type interface as described above.

A problem with many connector assemblies is that there may be electromagnetic interference (EMI) leakage at the connecting interface between the plug portion and the receptacle portion of the connector assembly. In order to solve this problem, it has been known to provide EMI gaskets between the mating portion of the connector assembly to prevent the ingress and/or egress of electromagnetic interference. For instance, in circular connectors, a wave-like or sinuous circular gasket is installed around the circular plug portion which is inserted into the circular receptacle portion at the connecting interface of the circular connector. The gasket may be fabricated of conductive metal to prevent EMI leakage at the interface. However, such metal EMI gaskets cause problems when used with rectangular plug and receptacle portions of connector assemblies.

From US-patent 4,572,921,which is considered as the closest prior art, an electromagnetic shielding device including a continuous metallic strip having a plurality of fingers defining spaces there-between, and a base portion including a plurality of segments which are arranged so as to securely mount the shielding device in a channel having a linear or irregular configuration is known. However, this shielding device is not adapted to connector assemblies.

In particular, a rectangularly configured connector assembly typically includes a rectangular plug portion defined by opposite minor sides and opposite major sides. The rectangular plug portion is inserted into a generally rectangular receptacle which has corresponding opposite minor sides and opposite major sides. If an attempt is made to install a rectangular EMI gasket about the rectangular plug portion at the connecting interface, the lengths of the gasket along the major sides of the plug portion tend to bow outwardly thereof. The outwardly bowed gasket often interferes with proper mating of the connector assembly and the gasket, in fact, could be deformed if mating is forced. The present invention is directed to solving this problem by providing a unique EMI gasket for rectangularly configured connectors.

### Summary of the Invention

An object, therefore, of the invention is to provide a new and improved EMI gasket for connector assemblies.

This object is achieved with a gasket according to claim 1.

Another object of the invention is to provide a connector assembly which includes the EMI gasket of the invention.

In the exemplary embodiment of the invention, an EMI gasket is provided for installing about a generally rectangular mating plug portion of a connector defined by opposite minor sides and opposite major sides. The EMI gasket is generally rectangular to define opposite minor sides and opposite major sides thereof corresponding to the minor and major sides, respectively, of the mating plug portion. The EMI gasket, in an unstressed condition, has a generally bow-tie configuration with the major sides thereof bowed inwardly. Therefore, the inwardly bowed major sides of the gasket are biased against the major sides of the mating plug portion when the gasket is installed thereof.

As disclosed herein, the EMI gasket is stamped of conductive sheet metal material. Preferably, the EMI gasket is stamped with a wave-spring or sinuous configuration circumferentially thereabout.

Other objects, features and advantages of the invention will be apparent from the following detailed description taken in connection with the accompanying drawings.

### Brief Description of the Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIGURE 1 is a perspective view of a connector assembly within which the invention is applicable, the assembly being in unmated condition;
FIGURE 2 is a top plan view of the connector assembly of Figure 1;
FIGURE 3 is a side elevational view of the connector assembly of Figure 1;
FIGURE 4 is an elevational view looking generally in the direction of line 4-4 of Figure 3;
FIGURE 5 is an elevational view looking generally in the direction of line 5-5 of Figure 3;
FIGURE 6 is a fragmented plan view showing a flat blank for the EMI gasket after stamping;
FIGURE 7 is a view similar to that of Figure 6, after the flat gasket blank has been formed;
FIGURE 8 is an end elevational view looking generally in the direction of line 8-8 of Figure 7; and
FIGURE 9 is a somewhat schematic end elevational view showing the bow-tie configuration of the EMI gasket in an unstressed condition.

### Detailed Description of the Preferred Embodiment

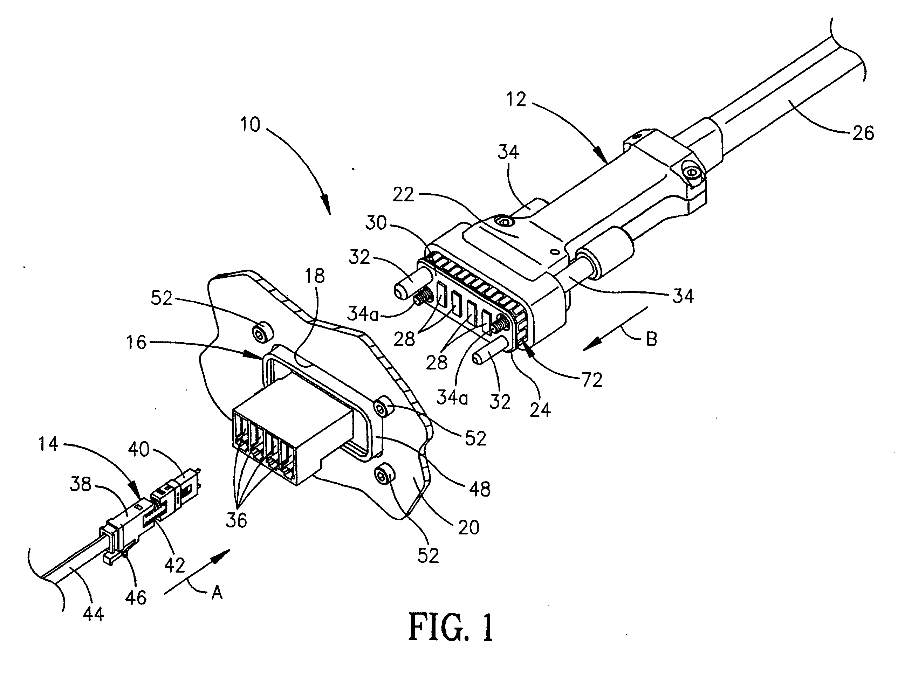

Referring to the drawings in greater detail, and first to Figures 1-3, the invention is embodied in a connector assembly, generally designated 10, which includes a fiber optic connector, generally designated 12, mateable with a plurality of fiber optic connector modules, generally designated 14, through an adapter, generally designated 16, which is mounted in an aperture 18 in a backplane or panel 20. It should be understood that, while the invention is disclosed herein in conjunction with a fiber optic connector assembly including fiber optic connector 12, the unique EMI gasket of the invention is applicable for use in a wide variety of other types of connectors.

With that understanding, fiber optic connector 12 generally includes a body 22 having a forwardly projecting mating plug portion 24. The connector terminates a fiber optic cable 26 which, itself, may include a plurality of ribbon-type cables having a plurality of optical fibers respectively terminated in a plurality of ferrules 28 (Fig. 1) projecting slightly from a front face 30 of mating plug portion 24. A pair of alignment pins 32 project forwardly of face 30 of mating plug portion 24. A pair of jack screws 34 extend through body 12 and have externally threaded shaft ends 34a which, like alignment pins 32, project forwardly of face 30 of mating plug portion 24.

Although only one fiber optic connector module 14 is shown in the drawings, four connector modules are inserted in the direction of arrows "A" (Figs. 1-3) into four passages 36 at the rear of adapter 16. Each connector module 14 includes a rear body 38 joined to a front ferrule 40 by a coil spring 42. Ferrule 40 terminates a plurality of optical fibers of a ribbon-type fiber optic cable 44. A latch 46 holds the connector module in its respective passage 36 in adapter 16. When four of the connector modules are inserted and latched within the four passage 36 of adapter 16, ferrules 40 of the connector modules align with ferrules 28 of fiber optic connector 12 to interconnect the respective optical fibers when connector 12 is inserted into adapter 16 in the direction of arrows "A".

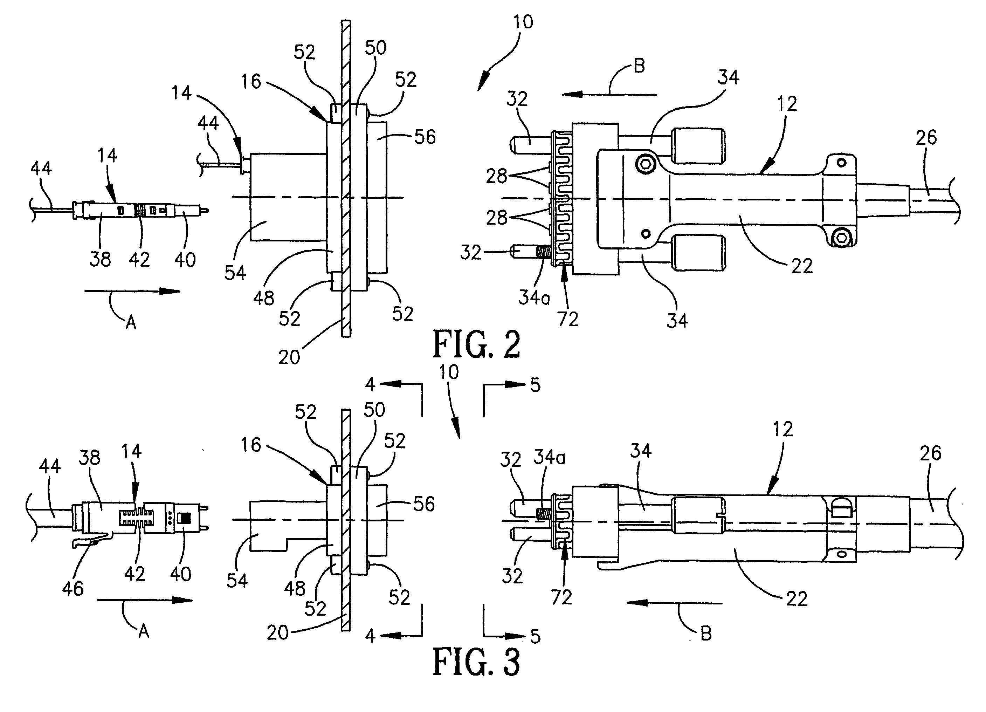

Adapter 16 includes a body portion 48 which extends through aperture 18 in panel 20. A flange 50 (Figs. 2 and 3) is integral with body portion 48 and abuts against a front face of panel 20. Appropriate fastening means 52 extend through flange 50 to mount adapter 16 to the panel, with body portion 48 extending through aperture 18 in the panel. As stated above, passages 36 in a housing portion 54 of the adapter receive fiber optic connector modules 14. The adapter may be a one-piece structure including body portion 48, flange 50 and housing portion 54.

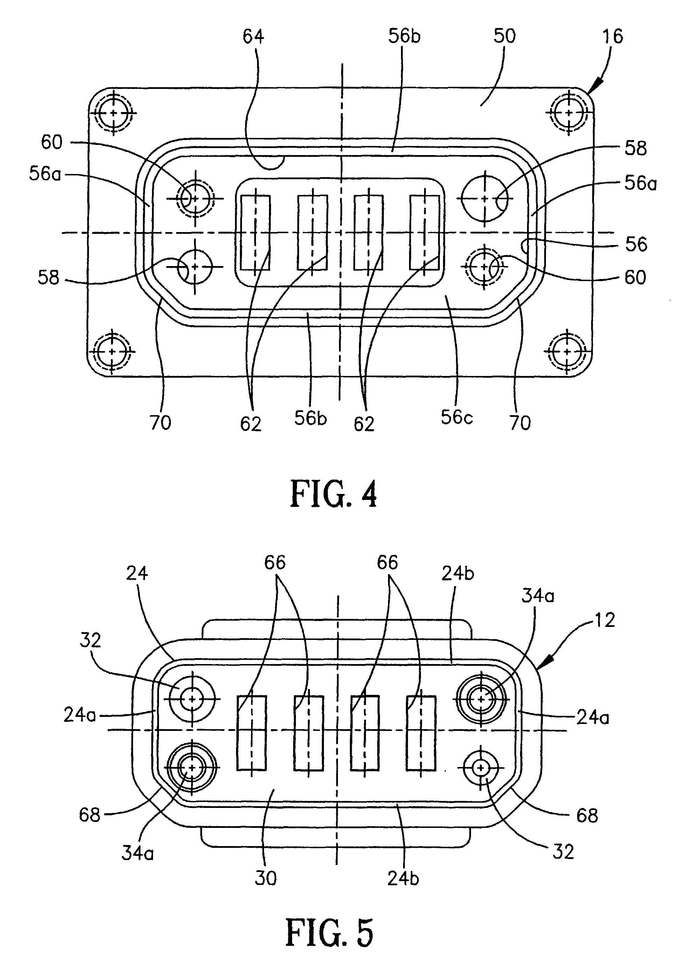

Referring to Figure 4 in conjunction with Figures 1-3, adapter 14 includes a generally rectangular receptacle 56 projecting from flange 50 in a mating direction toward connector 12 as best seen in Figures 2, 3 and 4. The receptacle is defined by opposite minor sides 56a and opposite major sides 56b. In other words, the minor sides are the short sides and the major sides are the long sides of the receptacle. The receptacle has a bottom or base wall 56c which includes a pair of alignment holes 58 for receiving alignment pins 32 of connector 12. A pair of internally threaded holes 60 receive externally threaded ends 34a of jack screws 34 to secure connector 12 mated to adapter 14. Four rectangular holes 62 are formed in a recessed area 64 of base wall 56c through which ferrules 40 of connector modules 14 project.

Figure 5 shows mating plug portion 24 of fiber optic connector 12 (Fig. 1). The plug portion is mated within receptacle 56 (Fig. 4) of adapter 14. The mating plug portion is defined by opposite minor sides 24a and opposite major sides 24b, with the plug portion configured or dimensioned for mating within receptacle 56. In other words, minor sides 24a and major sides 24b of the plug portion correspond to minor sides 56a and major sides 56b, respectively, of receptacle 56. Finally, Figure 5 shows that face 30 of the plug portion includes four rectangular holes 66 through which ferrules 28 (Fig. 1) project.

Plug portion 24 of connector 12 includes flattened corners 68 as best seen in Figure 5. Receptacle 56 of adapter 14 includes flattened corners 70 as best seen in Figure 4. These flattened corners of the plug portion and the receptacle provide a polarizing means so that connector 12 can be inserted into adapter 16 in only a preferred orientation.

As best seen in Figures 1-3, the invention is embodied in an EMI gasket, generally designated 72, which surrounds mating plug portion 24 of connector 12. Therefore, when the plug portion is inserted into receptacle 56 of adapter 14, the EMI gasket is disposed between the plug portion and the receptacle to prevent EMI leakage at the mating interface of the connector assembly.

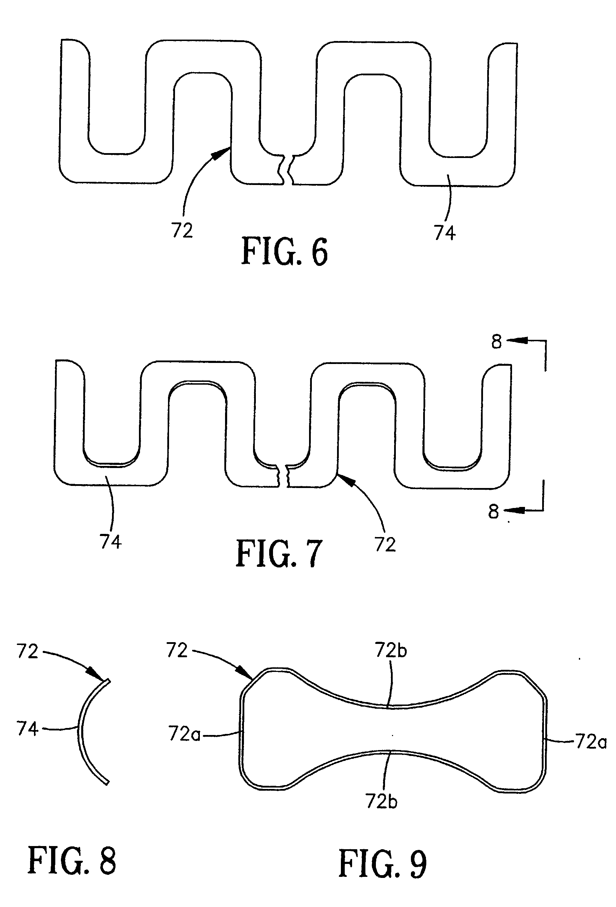

Figures 6-9 show the steps in fabricating EMI gasket 72 into its unique configuration. First, as seen in Figure 6, a flat gasket blank 74 is stamped in a wave-like or sinuous elongated strip from conductive sheet metal material, such as a copper alloy having somewhat springy or resilient characteristics. Figure 7 shows that gasket blank 74 then is formed into a bowed configuration in a direction transversely of the elongated strip. This transversely bowed configuration is best seen in Figure 8.

Figure 9 shows EMI gasket 72 formed into its final, generally bow-tie configuration. In other words, the gasket is formed to include opposite minor sides 72a and opposite major sides 72b, with the major sides of the gasket being bowed inwardly in an unstressed condition. Minor sides 72a correspond to minor sides 24a (Fig. 5) of mating plug portion 24, and major sides 72b correspond to major sides 24b of the plug portion. When EMI gasket 72 is installed about making plug portion 24 as shown in Figures 1-3, major sides 72b of the gasket are spring biased against major sides 24b of the plug portion. This prevents the sides of the gasket from bowing outwardly of the plug portion and interfering with mating of connector 12 within adapter 16. As stated in the "Background", above, rectangular gaskets tend to bow outwardly and, in fact, can be deformed during mating of connecting devices. The invention solves this problem.

It will be understood that the invention may be embodied in other specific forms without departing from the central characteristics as claimed.

## Claims

1. An EMI gasket (72) for installing about the rectangular mating plug portion (24) of a connector (12) defined by opposite minor sides (24a) and opposite major sides (24b), the EMI gasket being rectangular to define opposite minor sides (72a) and opposite major sides (72b) thereof corresponding to the minor and major sides, respectively, of the mating plug portion, the EMI gasket being stamped of conductive sheet spring metal material,
**characterized in that**
the EMI gasket (72) in an unstressed condition having a generally bow-tie configuration with the major sides (72b) thereof bowed inwardly whereby the major sides of the gasket are spring biased against the major sides (24b) of the plug portion (24) when the gasket is installed on the plug portion.

2. The EMI gasket of claim 1, wherein the gasket (72) is stamped with a sinuous configuration circumferentially about the gasket.

3. A connector assembly (10), comprising
a connector body (22) including a mating plug portion (24) for insertion into a receptacle (56) of a complementary mating connecting device (16), the mating plug portion being generally rectangular to define opposite minor sides (24a) and opposite major sides (24b) thereof; and
the EMI gasket (72) according to claim 1 or 2 being installed about the rectangular mating plug portion (24) of said connector body.

## Patentansprüche

1. EMI-Dichtung (72) zum Anbringen um den rechteckigen Paarungssteckerteil (24) eines Verbinders (12) herum, der durch gegenüberliegende schmale Seiten (24a) und gegenüberliegende Hauptseiten (24b) bestimmt ist, wobei die EMI-Dichtung rechteckig ist, sodass für diese gegenüberliegende schmale Seiten (72a) und gegenüberliegende Hauptseiten (72b) definiert sind, welche den schmalen Seiten bzw. den Hauptseiten des Paarungssteckerteils entsprechen, wobei die EMI-Dichtung aus leitfähigem Federmetallblechmaterial gestanzt ist, **dadurch gekennzeichnet, dass**
die EMI-Dichtung (72) in entspanntem Zustand eine allgemein schmetterlingsförmige Konfiguration aufweist,
wobei die Hauptseiten (72b) derselben nach innen gebogen sind, wodurch die Hauptseiten der Dichtung federnd gegen die Hauptseiten (24b) des Steckerteils (24) drücken, wenn die Dichtung an dem Steckerteil angebracht ist.

2. EMI-Dichtung nach Anspruch 1,
wobei die Dichtung (72) in Umfangsrichtung um die Dichtung herum mit einer sinusförmigen Konfiguration gestanzt ist.

3. Verbinderanordnung (10), umfassend:
einen Verbinderkörper (22) mit einem Paarungssteckerteil (24) zum Einfügen in eine Buchse (56) einer komplementär zu paarenden Verbindervorrichtung (16), wobei der Paarungssteckerteil allgemein rechteckig ist, sodass für diesen gegenüberliegende schmale Seiten (24a) und gegenüberliegende Hauptseiten (24b) definiert sind; und
die EMI-Dichtung (72) nach Anspruch 1 oder 2, welche um den rechteckigen Paarungssteckerteil (24) des Verbinderkörpers herum angebracht ist.

## Revendications

1. Joint d'étanchéité antiparasite (EMI) (72) pour installation autour de la partie rectangulaire (24) de fiche d'accouplement d'un connecteur (12) définie par des côtés mineurs opposés (24a) et des côtés majeurs opposés (24b), le joint d'étanchéité antiparasite étant rectangulaire pour définir ses côtés mineurs opposés (72a) et ses côtés majeurs opposés (72b) correspondant, respectivement, aux côtés mineurs et majeurs de la partie de fiche d'accouplement, le joint d'étanchéité antiparasite étant découpé à la presse à partir d'un matériau métallique de ressort sous forme de feuille conductrice,
**caractérisé en ce que**
le joint d'étanchéité antiparasite (72), dans un état non contraint, ayant globalement une configuration de noeud papillon, ses côtés majeurs (72b) étant arqués vers l'intérieur, ce par quoi les côtés majeurs du joint d'étanchéité sont rappelés par ressort contre les côtés majeurs (24b) de la partie (24) de fiche lorsque le joint d'étanchéité est installé sur la partie de fiche.

2. Joint d'étanchéité antiparasite selon la revendication 1, dans lequel le joint d'étanchéité (72) est découpé à la presse selon une configuration circonférentiellement sinueuse autour du joint d'étanchéité.

3. Ensemble (10) de connecteur, comprenant
un corps (22) de connecteur incluant une partie (24) de fiche d'accouplement pour introduction dans un réceptacle (56) d'un dispositif (16) de connexion d'accouplement complémentaire, la partie de fiche d'accouplement étant globalement rectangulaire pour définir ses côtés mineurs opposés (24a) et ses côtés majeurs opposés (24b) ; et
le joint d'étanchéité antiparasite (72) selon la revendication 1 ou 2 étant installé autour de la partie rectangulaire (24) de fiche d'accouplement dudit corps de connecteur.
